**Europäisches Patentamt**

**European Patent Office**

**Office européen des brevets**

(19)

(11) Numéro de publication: **0 295 989**
**B1**

(12) **FASCICULE DE BREVET EUROPEEN**

(45) Date de publication du fascicule du brevet:
**11.04.90**

(51) Int. Cl.⁴: **B60R 13/06**

(21) Numéro de dépôt: **88401285.7**

(22) Date de dépôt: **26.05.88**

(54) **Joint lécheur de vitre de porte.**

(30) Priorité: **12.06.87 FR 8708492**

(43) Date de publication de la demande:
**21.12.88 Bulletin 88/51**

(45) Mention de la délivrance du brevet:
**11.04.90 Bulletin 90/15**

(84) Etats contractants désignés:
**DE GB IT**

(56) Documents cités:
**FR-A- 2 290 558**
**FR-A- 2 453 041**
**FR-A- 2 468 717**
**FR-A- 2 588 035**
**GB-A- 674 803**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Druhen Charnaux, Yves, 970, rue Louis Blériot, F-78530 Buc(FR)**

(74) Mandataire: **Bolvin, Claude, 9, rue Edouard-Charton, F-78000 Versailles(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne un joint lécheur de vitre de porte de véhicule automobile, du genre de ceux qui sont montés sur une feuillure en collet à l'intérieur et à l'extérieur et entre lesquels coulisse la vitre de manière étanche.

Les joints lécheurs sont en général extrudés en bimatière, et comportent une partie souple de forme appropriée pour assurer la fonction d'étanchéité par léchage, et une partie dure en forme générale d'épingle destinée à chausser la feuillure (De tels joints lécheurs sont connus, par exemple, de FR-A 2 468 717 ou de FR-A 2 588 035).

Les joints lécheurs peuvent être déchaussés par le coulissement de la vitre et il est nécessaire de les verrouiller à la feuillure. A cet effet, chacune des deux feuillures de part et d'autre de la vitre se compose de deux tôles jointives, qui divergent vers le bas en un panneau externe et un panneau interne échancré longitudinalement et que vient contourner une gouttière solidaire du joint lécheur. Pour monter un tel joint lécheur, il est nécessaire que la partie en épingle solidaire du joint qui vient chausser la feuillure admette les déformations nécessaires pour que la gouttière puisse prendre sa position de verrouillage.

La présente invention a pour objet un joint lécheur du type ci-dessus qui peut facilement être mis en place par un robot et qui une fois mis en place est verrouillé sur la feuillure.

Ce joint lécheur est caractérisé en ce que la partie dure comprend un élément inférieur en forme d'épingle dont le flanc interne est plus long que le flanc externe, un élément supérieur en forme d'épingle propre à se clipper sur l'élément inférieur et comportant un flanc long situé du même côté que le flanc long de l'élément inférieur, et la gouttière qui est reliée par des charnières aux extrémités des flancs longs de l'élément inférieur et de l'élément supérieur et est propre à prendre une position de verrouillage sur un panneau interne échancré de la feuillure pendant le clippage de l'élément supérieur sur l'élément inférieur.

Les trois éléments constituant la partie la plus dure du joint sont de préférence venus de matière en coextrusion d'un seul tenant, reliés par des parois amincies.

On a décrit ci-après, à titre d'exemple non limitatif, un mode de réalisation du joint lécheur selon l'invention, avec référence aux dessins annexés dans lesquels :

La Figure 1 est une vue en coupe du joint lécheur avant montage;

La Figure 2 est une vue semblable à la Figure 1 après montage sur une feuillure;

Les Figures 3 à 6 représentent la partie dure du joint dans les différentes étapes du montage.

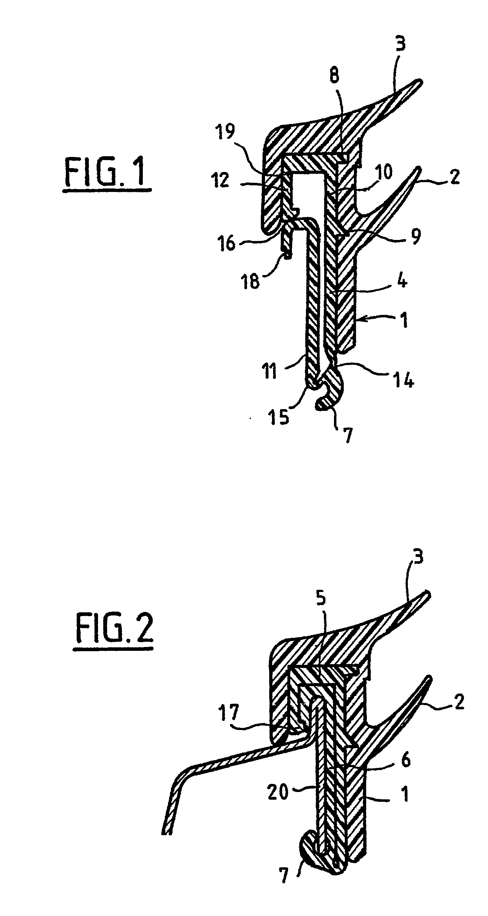

Tel qu'il est représenté à la Figure 1, le léche-vitre comporte une partie souple (1) munie de lèvres (2 et 3) propres à exercer la fonction d'étanchéité, et une partie dure (4) encastrée dans la partie souple (1).

La partie dure (4) comporte deux éléments en forme d'épingle, un élément supérieur (5) et un élément inférieur (6) propre à s'encliqueter dans l'élément supérieur (5), et une gouttière (7) reliant les éléments (5 et 6).

L'élement supérieur (5) comporte une arête supérieure (8) et une arête intermédiaire (9) encastrées dans la partie souple (1) pour assurer une meilleure solidarisation de l'ensemble.

L'élement supérieur (5) et l'élément inférieur (6) comportent chacun du côté intérieur de la porte une paroi longue (10 ou 11) et du côté extérieur une paroi courte (12 ou 13).

La gouttière (7) est reliée aux deux parois longues (10 et 11) par deux amincissements (14 et 15) formant charnières. Un film mince (16) relie avant montage le sommet de l'élément inférieur (6) à l'extrémité inférieure de la paroi courte (12) de l'élément supérieur (5).

La paroi courte (13) de l'élément inférieur (6) comporte un épaulement externe (18) et la paroi courte (12) de l'élément supérieur un épaulement interne (17) propres à s'encliqueter l'un dans l'autre pendant l'encliquetage de l'élément supérieur (5) sur l'élément inférieur (6).

La paroi courte (12) de l'élément supérieur (5) est raccordée à la partie pontée de cet élément par un étranglement (19) de manière à permettre le fléchissement de cette paroi courte pendant le clippage.

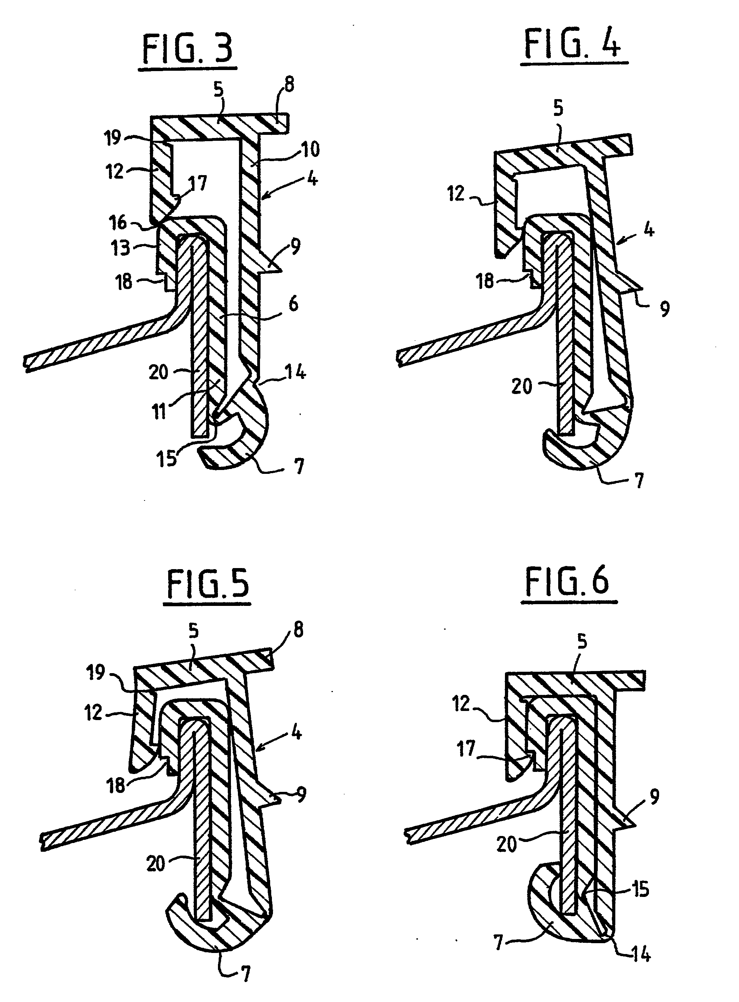

Pour effectuer le montage du lèche-vitre sur une feuillure de porte (20), un robot saisit le lèchevitre à l'aide d'une pince; il engage l'élément inférieur (6) sur la feuillure (20) (Figure 3); il exerce ensuite une pression verticale sur le haut de l'élément supérieur (5), ce qui a pour effet d'encastrer cet élément supérieur sur l'élément inférieur (Figures 4 et 5). Au cours de cette opération, le film (16) est déchiré, la paroi courte (12) de l'élément supérieur (5) fléchit; la gouttière (7) bascule autour de ses charnières (14 et 15) et vient s'engager sur l'extrémité inférieure de la feuillure. En fin de mouvement, l'épaulement interne (17) de la paroi courte (12) de l'élément supérieur (5) s'engage dans l'epaulement externe (18) de la paroi courte (13) de l'élément inférieur (6), ce qui a pour effet de clipper les deux éléments l'un à l'autre (Figure 6).

## Revendications

1. Joint lécheur de vitre de véhicule automobile, destine à être monté sur une feuillure en collet et comportant extrudées en bi-matière une partie souple (1) propre à exercer la fonction d'étanchéité et une partie dure (4) comportant une gouttière (7) de clippage et de verrouillage sur la feuillure (20), caractérisé en ce que la partie dure (4) comprend un élément inférieur (6) en forme d'épingle dont le flanc interne (11) est plus long que le flanc externe (13), un élément supérieur (5) en forme d'épingle, propre à se clipper sur l'élément inférieur (6) et comportant un flanc long (10) du même côté que le flanc long (11) de l'élément inférieur (6), et la gouttière (7) qui est reliée par des charniéres (14 et 15) aux extrémités des flancs longs de l'élément inférieur (6) et de l'élément supérieur (5) et qui est propre à prendre une position de verrouillage sur un panneau interne échancré de la feuillure pendant le clippage de l'élément supérieur (5) sur l'élément inférieur (6).

2. Joint lécheur selon la revendication 1, caractérisé en ce que l'élément inférieur (6), l'élément supérieur (5) et la gouttière (7) qui composent la partie dure (4) sont venus de matière d'un seul tenant en coextrusion, reliés par des parois amincies.

3. Joint lécheur selon la revendication 2, caractérisé en ce que le sommet de l'élément inférieur (6) est initialement relié à l'extrémité inférieure du flanc court (12) de l'élément supérieur (5) par un film mince (16) rompu par l'effort d'enfoncement de l'élément supérieur (5) sur l'élément inférieur (6).

4. Joint lécheur selon l'une des revendications 1 à 3, caractérisé en ce que le flanc court (13) de l'élément inférieur (6) comporte un épaulement externe (18) et en ce que le flanc court (12) de l'élément supérieur (5) comporte un épaulement interne (17) propre à s'encliqueter dans l'épaulement (18) externe pendant le clippage.

5. Joint lécheur selon l'une des revendications 1 a 4, caractérisé en ce que le flanc court (12) de l'élément supérieur (5) est raccordé à la partie pontée par un étranglement (19) autorisant le fléchissement de ce flanc court pendant l'enfoncement de cet élément supérieur sur l'élément inférieur.

6. Joint lécheur selon l'une quelconque des revendications précédentes, caractérisé en ce que les charnières (14 et 15) qui relient l'arête d'ancrage de la gouttière (7) aux flancs longs (11, 10) de l'élément inférieur (6) et de l'élément supérieur (5) sont disposés de manière que le déplacement relatif des éléments pendant le clippage provoque le basculement de la gouttière (7) et sa venue en prise avec le panneau interne échancré de la feuillure (20).

## Claims

1. Cleaning strip for motor vehicle windows, intended to be mounted on a support in the form of a collar and comprising, in a bi-material extrusion, a flexible portion (1) adapted for exercising the sealing function and a hard portion (4) comprising a gutter (7) for clipping and locking on the support (20), characterized in that the hard portion (4) comprises a lower element (6) in the form of a hairpin whose internal leg (11) is longer than the external leg (13), an upper element (5) in the form of a hairpin adapted for clipping on the lower element (6) and comprising a long leg (10) situated on the same side as the long leg (11) of the lower element (6) and the gutter (7) which is connected by hinges (14 and 15) to the ends of the long legs of the lower element (6) and of the upper element (5) and which is adapted to assume a locked position on an internal recessed panel of the support during clipping of the upper element (5) on the lower element (6).

2. Cleaning strip according to claim 1, characterized in that the lower element (6), the upper element (5) and the gutter (7) which form the hard portion (4) are coextruded in a single piece and connected together by thin walls.

3. Cleaning strip according to claim 2, characterized in that the top of the lower element (6) is initially connected to the lower end of the short leg (12) of the upper element (5) by a thin film (16) which is broken by the force of fitting the upper element (5) on the lower element (6).

4. Cleaning strip according to one of claims 1 to 3, characterized in that the short leg (13) of the lower element (6) comprises an external shoulder (18) and in that the short leg (12) of the upper element (5) comprises an internal shoulder (17) adapted to clip in the external shoulder (18) during snap fitting.

5. Cleaning strip according to one of claims 1 to 4, characterized in that the short leg (12) of the upper element (5) is connected to the bridging portion by a restriction (19) allowing this short leg to bend when this upper element is fitted on the lower element.

6. Cleaning strip according to one of the preceding claims, characterized in that the hinges (14 and 15) which join the anchorage edge of the gutter (7) to the long legs (11, 10) of the lower element (6) and of the upper element (5) are disposed so that the relative movement of the elements during snap fitting causes the gutter (7) to rotate and engage with the internal recessed panel of the support (20).

## Patentansprüche

1. Abstreifer für Kraftfahrzeugfenster, zum Anbau an einem umgebogenen Falz, bestehend aus Extrudaten aus Verbundmaterial mit einem weichen Bestandteil (1), der geeignet ist, die Dichtungsfunktion auszuüben, und einem harten Bestandteil mit einer Rinne (7) zum Anklemmen und Einrasten an dem Falz (20), dadurch gekennzeichnet, daß der harte Bestandteil (4) ein unteres Bauteil (6) in Form einer Nadel, deren innere Seite (11) länger als die äußere Seite (13) ist, ein oberes Bauteil (5) in Form einer Nadel, die geeignet ist, auf das untere Bauteil (6) aufgeklemmt zu werden, und die eine lange Seite (10) auf derselben Seite wie die lange Seite (11) des unteren Bauteiles (6) aufweist, und die Rinne (7) enthält, die durch Scharniere (14 und 15) mit den Enden der langen Seiten des unteren Bauteiles (6) und des oberen Bauteiles (5) verbunden und geeignet ist, eine Einraststellung an einer inneren umgebogenen Wand des Falzes während des Aufklemmens des oberen Bauteiles (5) auf das untere Bauteil (6) einzunehmen.

2. Abstreifer nach Anspruch 1, dadurch gekennzeichnet, daß das untere Bauteil (6), das obere Bauteil (5) und die Rinne (7), die den harten Bestandteil (4) bilden, aus einem einzigen Stück bei der Koextrusion stammen, durch dünne Wandungen verbunden sind.

3. Abstreifer nach Anspruch 2, dadurch gekennzeichnet, daß das untere Bauteil (6) zunächst mit dem unteren Ende der kurzen Seite (12) des oberen Bauteiles (5) durch einen dünnen Film (16) verbunden ist, der durch die Kraft des Absenkens des oberen Bauteiles (5) auf das untere Bauteil (6) zerrissen wird.

4. Abstreifer nach einem der Ansprüche 1 bis 3, dadurch gekennzeichnet, daß die kurze Seite (13) des unteren Bauteiles (6) einen äußeren Vorsprung (18) aufweist und daß die kurze Seite (12) des oberen Bauteiles (5) einen inneren Vorsprung (17) aufweist, der geeignet ist, am äußeren Vorsprung (18) beim Einschnappen einzurasten.

5. Abstreifer nach einem der Ansprüche 1 bis 4, dadurch gekennzeichnet, daß die kurze Seite (12) des oberen Bauteiles (5) mit dem Überbrückungsteil über eine Einschnürung (19) verbunden ist, die das Abbiegen dieser kurzen Seite während des Absenkens dieses oberen Bauteiles auf das untere Bauteil ermöglicht.

6. Abstreifer nach einem der vorhergehenden Ansprüche, dadurch gekennzeichnet, daß die Scharniere (14 und 15), die die Verankerungskante der Rinne (7) mit den langen Seiten (11, 10) des unteren Bauteiles (6) und des oberen Bauteiles (5) verbinden, in der Weise angeordnet sind, daß die relative Verschiebung der Bauteile während des Einrastens das Verschwenken der Rinne (7) und ihren Eingriff an der inneren abgebogenen Wand des Falzes (20) hervorruft.

FIG.1

FIG.2

FIG. 3

FIG. 4

FIG.5

FIG.6